# EUROPEAN PATENT APPLICATION

(11) **EP 4 166 274 A1**
(43) Date of publication of application: **19.04.2023**
(21) Application number: 20940958.0
(22) Date of filing: 16.06.2020
(51) Int. Cl.: B23Q 11/00, B23B 47/32

(54) **CHIP COLLECTION TOOL**

(71) Applicant: Hitachi, Ltd., Tokyo 100-8280 (JP)
(72) Inventor: FUJINAGA, Fumio, Tokyo 100-8280 (JP); OKADA, Norihisa, Tokyo 100-8280 (JP); MIYAJIMA, Seiji, Tokyo 100-8280 (JP); TSUKAMOTO, Suguru, Tokyo 100-8280 (JP); SUGIMOTO, Shinya, Tokyo 100-8280 (JP)
(74) Representative: Mewburn Ellis LLP
(86) International application number: PCT/JP2020/023549
(87) International publication number: WO 2021/255818

(57) **Abstract**

Provided is a swarf collecting tool that collects swarf discharged in processing a workpiece, for example, in boring a hole in a workpiece with a blade-shaped object, is disassemblable with ease when the swarf collecting tool is clogged with the swarf, and has a blade-shaped object protruding amount adjusting function of suppressing movement of the blade-shaped object through the workpiece by a predetermined depth or more. A swarf collecting tool 10 is mounted to a drive 5 for driving a blade-shaped object 1 in processing a workpiece 50. The swarf collecting tool 10 includes: a rear portion 30 configured to hold the blade-shaped object 1 inserted therethrough and to rotate together with the blade-shaped object 1; a front portion 20 through which the blade-shaped object 1 is inserted, the front portion 20 including a swarf discharge portion 24d configured to discharge swarf 42 produced in processing the workpiece 50 with the blade-shaped object 1, and a protruding amount adjusting mechanism configured to adjust a protruding amount of the blade-shaped object 1; and a bearing 60 with which the front portion 20 and the rear portion 30 are coupled in a relatively rotatable manner.

## Description

### Technical Field

The present invention relates to a swarf collecting tool.

### Background Art

Boring a hole in an object (a workpiece) with a drill, an auger, or the like causes scattering of swarf. It is necessary to collect the scattered swarf; therefore, it takes time and effort to carry out processing work. In a case where a workpiece is made of electrically conductive metal, swarf having a sharp end face adheres to, for example, a board of an electric component to cause an electrical short circuit. In inspecting, for example, a board, a worker wears thick gloves in order to prevent damage to his/her hands owing to direct contact of his/her hands with sharp swarf, which may lead to degradation in workability. It has therefore been desired to process a workpiece and to collect swarf at the same time before the swarf scatters during the processing.

PTL 1 discloses a technique concerning a swivel apparatus of a dust collectable drill machine, the swivel apparatus being capable of using rotation of a main shaft not only as a cutting force in boring a hole in a workpiece with a tubular drill, but also for the purpose of producing a current of air for actively discharging swarf and dust resulting from the cutting.

### Citation List

### Patent Literature

PTL 1: JP 2019-55574 A

### Summary of Invention

### Technical Problem

The technique disclosed in PTL 1 is applicable to a relatively large machine. Desirably, a collecting tool for collecting swarf discharged in boring a hole in a workpiece with a simpler tool such as a drill or an auger is disassembled with ease in order to quickly remove the swarf collected therein. In order to prevent damage to a wire, a substrate, and the like behind or in the workpiece, also desirably, such a collecting tool has a blade-shaped object protruding amount adjusting function of adjusting a cutting depth (a protruding amount) of the drill, the auger, or the like passing through the workpiece to prevent a distal end of the drill, the auger, or the like from reaching a position deeper than a predetermined cutting depth.

In view of the circumstances described above, an object of the present invention is to provide a swarf collecting tool that collects swarf discharged in processing a workpiece, for example, in boring a hole in a workpiece with a blade-shaped object, and has a blade-shaped object protruding amount adjusting function of suppressing movement of the blade-shaped object through the workpiece by a predetermined depth or more.

### Solution to Problem

In order to achieve the object, a typical swarf collecting tool according to the present invention is
a swarf collecting tool to be mounted to a drive for driving a blade-shaped object in processing a workpiece,
the swarf collecting tool including:
   a first base portion configured to hold the blade-shaped object inserted therethrough and to rotate together with the blade-shaped object;
   a second base portion through which the blade-shaped object is inserted,
the second base portion including
   a swarf discharge portion configured to discharge swarf produced in processing the workpiece with the blade-shaped object, and
   a protruding amount adjusting mechanism configured to adjust a protruding amount of the blade-shaped object; and
   a bearing with which the second base portion and the first base portion are coupled in a relatively rotatable manner.

### Advantageous Effects of Invention

The present invention provides a swarf collecting tool that collects swarf discharged in processing a workpiece, for example, in boring a hole in a workpiece with a blade-shaped object and has a blade-shaped object protruding amount adjusting function of suppressing movement of the blade-shaped object through the workpiece by a predetermined depth or more.

Other features, configurations, and advantageous effects will become obvious from the following description of an embodiment.

### Brief Description of Drawings

[FIG. 1] FIG. 1 is a side view of a drive provided with a swarf collecting tool having a drill.
[FIG. 2] FIG. 2 is a perspective view of the swarf collecting tool according to an embodiment.
[FIG. 3] FIG. 3 is a perspective view of developed constituent components of the swarf collecting tool according to the embodiment.
[FIG. 4] FIG. 4 is an axial sectional view of the swarf collecting tool having the drill.
[FIG. 5] FIG. 5 is a schematic diagram of a state in boring a hole in a workpiece with the drive provided with the swarf collecting tool having the drill.

### Description of Embodiments

An embodiment of the present invention will be described below with reference to the drawings. In the following description, the term "x direction", "x axis" may refer to an axial direction of a blade-shaped object 1 such as a drill or an auger, the term "y direction" may refer to a direction orthogonal to the x direction, and the term "z direction" may refer to a direction orthogonal to the x direction. Also in the following description, the term "leading end", "leading end portion", "leading end side" may refer to a side of each constituent component of a swarf collecting tool 10 nearer to a workpiece 50, and the term "trailing end", "trailing end portion", "trailing end side" may refer to a side of each constituent component of the swarf collecting tool 10 farther from the workpiece 50 (i.e., nearer to a drive 5).

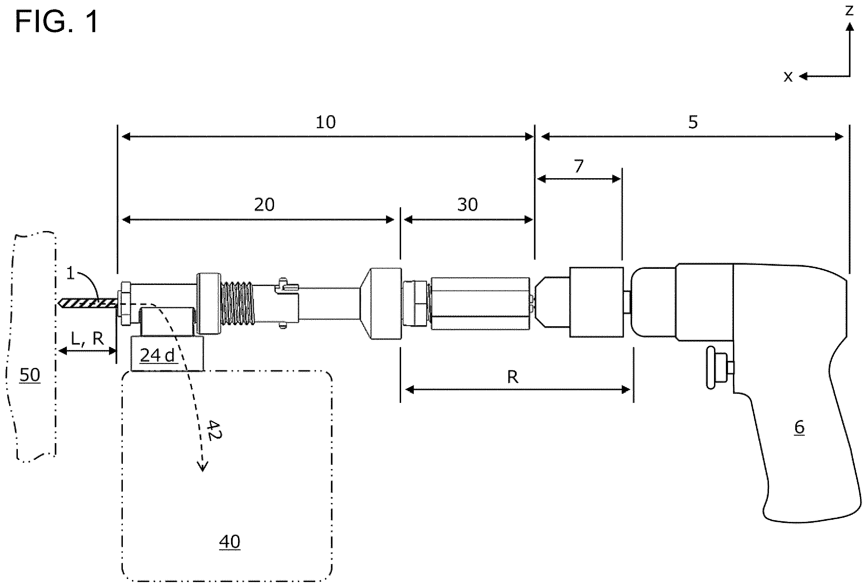

FIG. 1 is a side view of a drive provided with a swarf collecting tool having a drill. A drive 5 includes a holding portion (a chuck) 7 for holding a swarf collecting tool 10 through which a blade-shaped object 1 is inserted in boring a hole in a workpiece 50.

The swarf collecting tool 10 includes a front portion (a second base portion) 20 on the leading end side, and a rear portion (a first base portion) 30 on the trailing end side, the rear portion 30 following the front portion 20. The front portion 20 has a function of discharging swarf 42 produced in processing the workpiece 50 with the blade-shaped object 1. The front portion 20 also has a function of adjusting an x-directional length of the front portion 20 along the blade-shaped object 1 to adjust a protruding amount L from the leading end portion of the blade-shaped object 1 to the leading end portion of the front portion 20. The rear portion 30 has a function of holding the blade-shaped object 1.

The rear portion 30 of the swarf collecting tool 10 and the holding portion 7 of the drive 5 make up a rotating portion R that is rotatable about the x axis in conjunction with a shaft of the blade-shaped object 1. An operator is able to subject the workpiece 50 to boring. In boring a hole in the workpiece 50, the operator grasps a grasp portion (a grip portion) 6 of the drive 5 with one hand while supporting the front portion 20 with the other hand. The operator does not necessarily support the front portion 20 with his/her hand if the operator is difficult to support the front portion 20 depending on his/her posture in boring a hole in the workpiece 50.

The swarf 42 produced at the time of boring is passed through the front portion 20 while being guided by a spiral groove in the blade-shaped object 1 (a spiral groove in a tip end of a drill), and is temporarily stored in a swarf collecting portion 40. The swarf collecting portion 40 is not limited as long as it has a function of temporarily storing swarf therein. Examples of the swarf collecting portion 40 may include a container and a bag. The operator is able to discard the swarf 42 in the swarf collecting portion 40, into a predetermined place (e.g., a collecting box) if necessary.

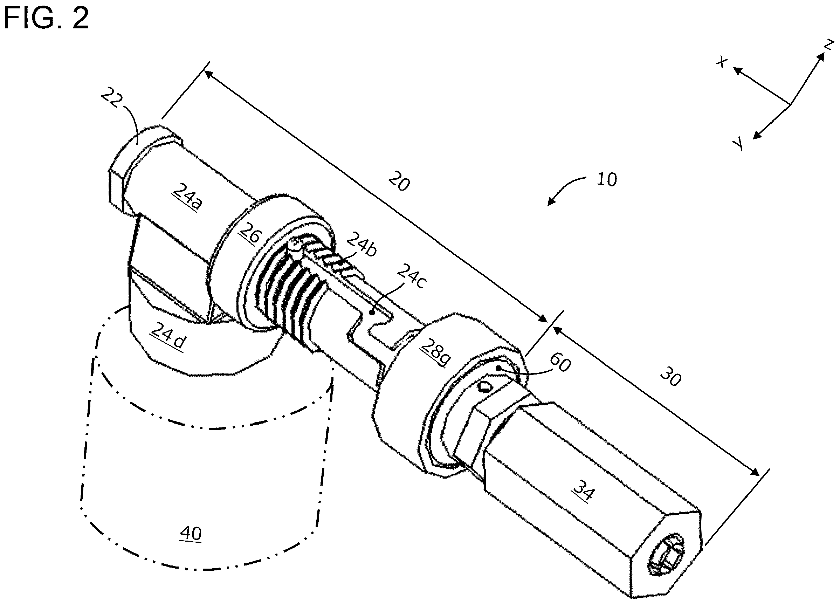

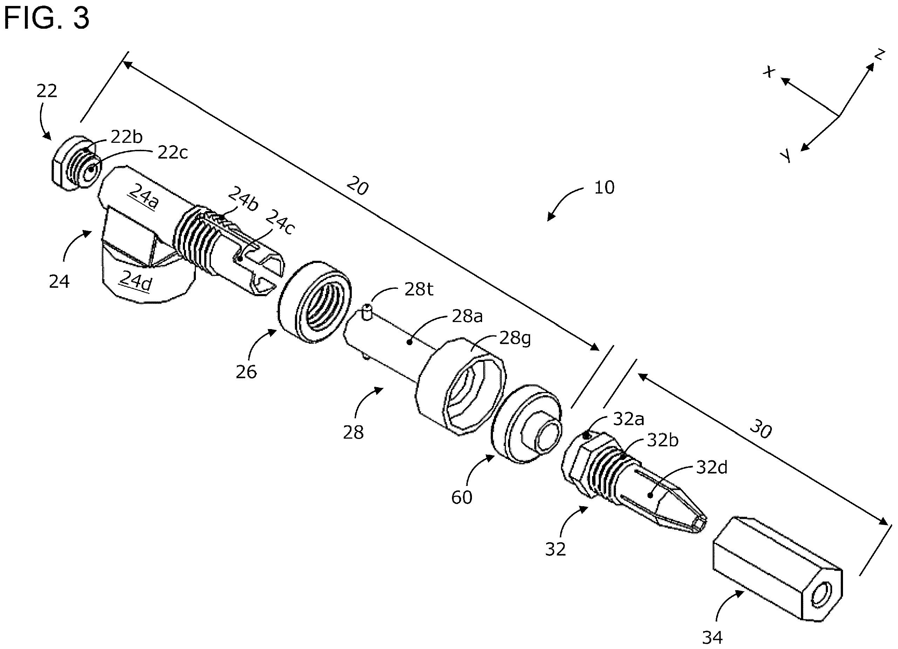

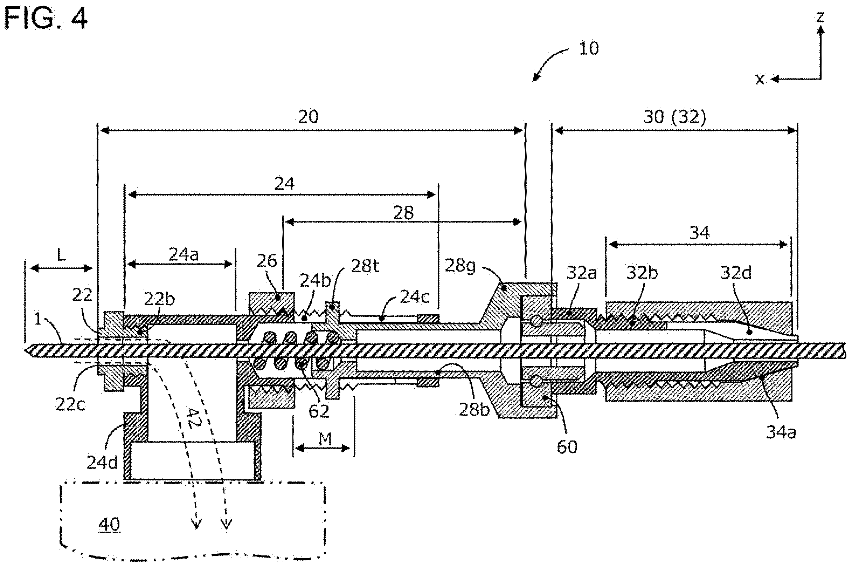

FIG. 2 is a perspective view of the swarf collecting tool according to the embodiment. FIG. 3 is a perspective view of developed constituent components of the swarf collecting tool according to the embodiment. FIG. 4 is an axial sectional view of the swarf collecting tool having the drill. At a start of the boring, the front portion 20 and the rear portion 30 are separate from each other. After completion of the boring, that is, when the blade-shaped object 1 reaches the predetermined depth L of the hole, the front portion 20 and the rear portion 30 are in proximity to or in contact with each other.

The swarf collecting tool 10 includes the front portion 20 through which the blade-shaped object 1 is inserted, and the rear portion 30 holding the blade-shaped object 1 inserted therethrough, the rear portion 30 being fitted to an inner race of a bearing 60 disposed on the trailing end portion of the front portion 20. The front portion 20 and the rear portion 30 are independent of each other and are not mechanically connected to each other.

The front portion 20 includes a contact portion 22 to be brought into contact with the workpiece 50, a cylindrical portion 24 through which the swarf 42 discharged from the blade-shaped object 1 is discharged toward the swarf collecting portion 40, a length adjusting portion 26 screwed on the cylindrical portion 24 such that a position thereof is adjustable in the x direction, thereby adjusting a minimum length of the front portion 20 in the axial direction, and a receiving portion 28 to which an outer race of the bearing 60 is mounted.

The cylindrical portion 24 includes a swarf discharge portion 24d having a screw portion into which a male screw portion 22b of the contact portion 22 is screwed, the swarf discharge portion 24d being configured to guide the swarf 42 discharged from the blade-shaped object 1, into the swarf collecting portion 40, and a portion configured to adjust a lengthwise dimension of the front portion 20 in the x direction.

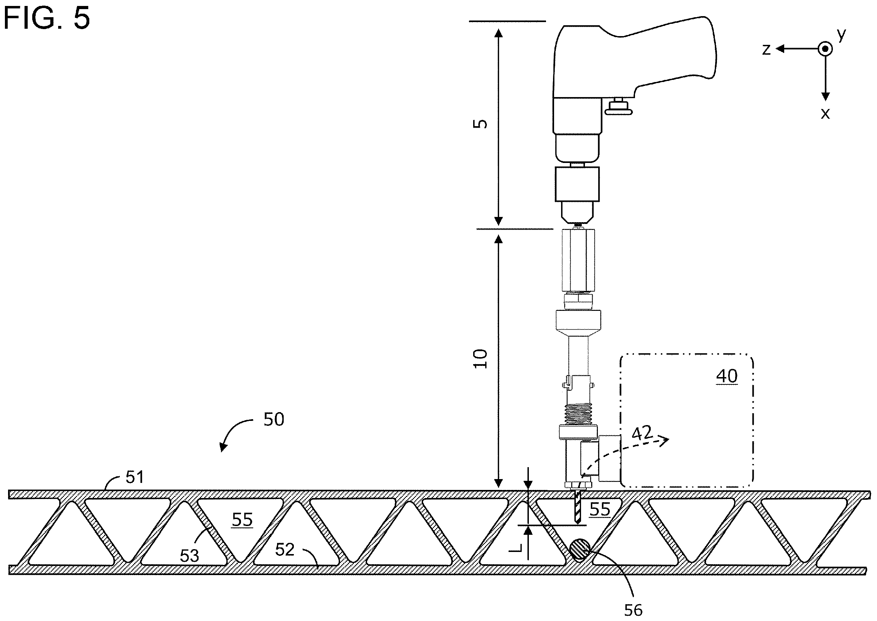

The contact portion 22 is brought into contact with the workpiece 50 in boring a hole in the workpiece 50 with the blade-shaped object 1 (see FIG. 5). The contact portion 22 is displaced toward the receiving portion 28 in conjunction with the cylindrical portion 24 as the blade-shaped object 1 is inserted through the workpiece 50. The contact portion 22 is locked when the blade-shaped object 1 is inserted through the workpiece 50 by the predetermined protruding amount (depth) L. The contact portion 22 thus prevents the leading end portion of the blade-shaped object 1 from being inserted through the workpiece 50 beyond the protruding amount L.

The contact portion 22 includes the male screw portion 22b screwed into the screw portion provided on an x-directional end portion of the swarf guide portion 24a. The contact portion 22 has a through hole 22c through which the blade-shaped object 1 passes. The protruding amount or protruding dimension L is a dimension from an x-directional leading end portion of the blade-shaped object 1 to a leading end side of the contact portion 22 displaced to the most trailing end side. A mechanism of adjusting the protruding dimension L will be described later.

The cylindrical portion 24 includes a swarf guide portion 24a following the portion into which the contact portion 22 is screwed. The swarf guide portion 24a is disposed beside the swarf collecting portion 40. The swarf produced in processing the workpiece 50 with the blade-shaped object 1 is guided into the swarf collecting portion 40 through the swarf guide portion 24a and the swarf discharge portion 24d.

According to the configuration in which the contact portion 22 is secured to the swarf guide portion 24a with the screw, when the swarf is clogged in a space from the contact portion 22 to the swarf discharge portion 24d via the swarf guide portion 24a, the screw is unscrewed to detach the contact portion 22 from the swarf guide portion 24a, so that the swarf 42 in the space is easily removed through an opening.

The front portion 20 has a protruding amount adjusting mechanism of adjusting the protruding amount of the blade-shaped object 1. The protruding amount adjusting mechanism is made up of the cylindrical portion 24, the receiving portion 28 combined with the cylindrical portion 24, and the length adjusting portion 26 screwed on the screw portion 24b of the cylindrical portion 24.

As illustrated in FIGS. 2 and 3, the cylindrical portion 24 has, on its trailing end portion, the screw portion 24b and crank-shaped groove portions 24c extending in the x direction. The groove portions 24c are formed in two sides of the cylindrical portion 24 in the z direction. The receiving portion 28 has, on its cylindrical leading end portion, a pair of projection portions 28t each protruding radially. The cylindrical portion of the receiving portion 28 has an outer diameter that is slightly smaller than an inner diameter of the cylindrical portion 24. The receiving portion 28 is telescopically inserted into the cylindrical portion 24 with the projection portions 28t on a small cylindrical portion 28b respectively guided by the groove portions 24c. The cylindrical portion 24 and the receiving portion 28 are thus coupled to each other such that the cylindrical portion 24 and the receiving portion 28 are relatively displaced in the x direction, but do not relatively rotate.

As illustrated in FIG. 4, an elastic body (a spring) 62 is disposed between a leading end portion of the receiving portion 28 and a middle of the cylindrical portion 24 in the x direction to which the leading end portion is connected. The elastic body 62 is provided for biasing the front portion 20 toward the leading end side. The elastic body 62 biases the cylindrical portion 24 toward the leading end side with respect to the receiving portion 28, so that the contact portion 22 is pressed against the workpiece 50. When the blade-shaped object 1 rotates to bore a hole in the workpiece 50 with the contact portion 22 brought into contact with the workpiece 50, the swarf 42 produced from the workpiece 50 passes between the through hole 22c in the contact portion 22 and the blade-shaped object 1. The swarf 42 is then guided into the swarf collecting tool 10 and is temporarily stored in the swarf collecting portion 40. This configuration suppresses scattering of the swarf in the boring site.

Even in a case where the operator is disable to support the front portion 20 with his/her hand in boring a hole in, for example, a ceiling with the blade-shaped object 1 directed upward in the direction of gravity, this configuration easily keeps a contact state of the front portion 20 with the workpiece 50 (the ceiling in this case) and therefore suppresses scattering of the swarf 42.

The length adjusting portion 26 is movable along the cylindrical portion 24 in the x direction in such a manner that the length adjusting portion 26 is screwed on the screw portion 24b. Therefore, the length adjusting portion 26 is located at a desired position. In adjusting the length, the length adjusting portion 26 is screwed on the screw portion 24b of the cylindrical portion 24, and the cylindrical portion of the receiving portion 28 is then fitted into the cylindrical portion 24 with the projection portions 28t guided along the groove portions 24c. Thereafter, the length adjusting portion 26 is relatively rotated about the x axis (the shaft of the blade-shaped object 1), so that the length adjusting portion 26 is located at any position since the length adjusting portion 26 moves forward and backward in the x direction within a range of an adjustment amount M of the screw portion 24b. In addition, since the movement of the projection portions 28t is restricted by the contact with the length adjusting portion 26, the x-directional dimension of the front portion 20 is adjusted. A length adjusting portion 26 that is split in the x direction may be provided for suppressing loosening of the length adjusting portion 26 through the use of double nut action.

The receiving portion 28 includes the small cylindrical portion 28b having an outer diameter smaller than the inner diameter of the cylindrical portion 24, and a large cylindrical portion 28g connected to the small cylindrical portion 28b and holding the bearing 60. Each of the small cylindrical portion 28b and the large cylindrical portion 28g is provided coaxially with the shaft of the blade-shaped object 1. The small cylindrical portion 28b has on its leading end portion the pair of projection portions 28t. The large cylindrical portion 28g, into which the outer race of the bearing 60 is fitted, has an open side nearer to the rear portion 30, and the inner race of the bearing 60 protrudes rearward from the open side.

Since the groove portions 24c for guiding the projection portions 28t of the receiving portion 28 each have a crank shape, the projection portions 28t are locked at the crank-shaped positions of the groove portions 24c when the operator who grasps the drive 5 with one hand directs the leading end portion of the blade-shaped object 1 downward without supporting the cylindrical portion 24 with the other hand. This configuration therefore suppresses unintended separation of the cylindrical portion 24 from the receiving portion 28. In order to enhance the strength of the projection portions 28t, each projection portion 28t may have an elliptic shape in sectional view crossing the direction in which each projection portion 28t protrudes such that its longer axis extends in the x direction.

The rear portion 30 includes a blade-shaped object holding portion 32 holding the blade-shaped object 1 axially inserted through the blade-shaped object holding portion 32, and a tightening portion 34 having a tubular shape and tightening the blade-shaped object holding portion 32 holding the blade-shaped object 1 to suppress falling of the blade-shaped object 1. The tightening portion 34 has a hexagonal outer shape in sectional view; however, the outer shape is not limited thereto.

The blade-shaped object holding portion 32 includes a cylindrical portion 32a into which the inner race of the bearing 60 held by the large cylindrical portion 28g of the receiving portion 28 is fitted, a male screw portion 32b that is contiguous with the cylindrical portion 32a, and a claw portion 32d that is tapered and is connected to the male screw portion 32b. The claw portion 32d has a plurality of claws for holding the blade-shaped object 1. The claws are arranged circumferentially at spacings.

As illustrated in FIG. 1, the holding portion 7 of the drive 5, the blade-shaped object 1 held by the holding portion 7, and the rear portion 30 holding the blade-shaped object 1 make up the rotating portion R that is rotatable at the time of the processing the workpiece 50 with the blade-shaped object 1. On the other hand, the front portion 20 does not rotate in such a manner that the operator supports the front portion 20 by hand.

As illustrated in FIG. 4, the tightening portion 34 includes a female screw portion into which the male screw portion 32b is screwed, and a tapered inner peripheral face 34a adjacent to the female screw portion. The female screw portion of the tightening portion 34 is screwed on the male screw portion 32b of the blade-shaped object holding portion 32 in a state in which the tightening portion 34 coaxially overlaps the claw portion 32d holding the blade-shaped object 1. As a result, the tightening portion 34 is moved with respect to the claw portion 32d, so that the tapered inner peripheral face 34a presses the claw portion 32d from the radially outer side of the claw portion 32d so as to reduce a diameter of the claw portion 32d. The claw portion 32d holding the blade-shaped object 1 thus firmly tightens the blade-shaped object 1.

FIGS. 2 to 4 each illustrate an example of the bearing 60 disposed on the trailing end portion of the front portion 20 (specifically, the large cylindrical portion 28g of the receiving portion 28). The bearing 60 may alternatively be disposed on a front end portion of the rear portion 30.

FIG. 5 is a schematic diagram of a state in boring a hole in the workpiece with the drive provided with the swarf collecting tool having the drill. The workpiece 50 illustrated in FIG. 5 includes two opposite face plates 51 and 52 and a plurality of connecting plates 53 connecting the face plates 51 and 52. The workpiece 50 is formed by extrusion molding.

The workpiece 50 is formed by extrusion molding in the y-axis direction. The workpiece 50 includes a wire 56 extending in the y-axis direction. The wire 56 is placed in a space 55 defined by the face plate 51, the face plate 52, and adjacent two of the connecting plates 53. Next, a description will be given of advantageous effects and the like of this embodiment with an exemplary operation that the operator bores a hole in the face plate 51 defining the space 55, in which the wire 56 is placed, with the blade-shaped object 1 of the swarf collecting tool 10 according to this embodiment.

The operator prepares the blade-shaped object 1 and the drive 5. The drive 5 to be preferably used herein is configured to drive the blade-shaped object 1 with electric power or high-pressure air. The operator inserts the blade-shaped object 1 fixed to the holding portion 7 of the drive 5 into the blade-shaped object holding portion 32 and the tightening portion 34. The operator then turns the tightening portion 34 to firmly press the claw portion 32d of the blade-shaped object holding portion 32 against the blade-shaped object 1.

The operator then inserts the blade-shaped object 1 to which the rear portion 30 is fixed into the front portion 20, and assembles the blade-shaped object 1, the front portion 20, the rear portion 30, and the drive 5 into one as described above. In the state in which the front portion 20 is pressed against the rear portion 30, the operator turns the length adjusting portion 26 of the front portion 20 to adjust the protruding amount (dimension) L of the leading end portion of the blade-shaped object 1 to a predetermined protruding amount. The protruding amount L at this time is set at such a protruding amount that the leading end portion of the blade-shaped object 1 inserted through the face plate 51 does not come into contact with the wire 56.

In the boring operation, the operator grasps the grasp portion (the grip portion) 6 of the drive 5 with one hand while supporting the front portion 20 with the other hand, and brings the leading end of the blade-shaped object 1 into contact with the face plate 51 of the workpiece 50. At this time, the operator temporarily pulls the front portion 20 rearward against the biasing force of the elastic body 62, thereby exposing the vicinity of the leading end of the blade-shaped object 1. This configuration thus facilitates positioning of the blade-shaped object 1. The operator then pulls a trigger of the drive 5 to rotate the blade-shaped object 1. The operator thus bores a hole in the face plate 51. During the boring operation, when the operator simply supports the front portion 20 by hand, the contact portion 22 of the front portion 20 is pressed against the face plate 51 with the biasing force of the elastic body 62. Therefore, the swarf 42 from the face plate 51 is easily guided into the swarf collecting portion 40 without scattering around.

With this configuration, even when the operator maintains the force to press the drive 5 against the workpiece 50, the projection portions 28t are in contact with the length adjusting portion 26 to restrict the movement of the contact portion 22. Therefore, the leading end portion of the blade-shaped object 1 does not reach a position deeper than the protruding amount L of the leading end portion of the blade-shaped object 1. This configuration thus enables boring a hole in the face plate 51 without a situation in which the leading end portion of the blade-shaped object 1 inserted through the face plate 51 damages the wire 56 in the space 55 below the face plate 51, while collecting the swarf 42 without scattering of the swarf 42.

In addition, the length adjusting portion 26 of the front portion 20 is capable of adjusting the x-directional dimension of the front portion 20 to any dimension. Therefore, even when the x-directional dimension of the blade-shaped object 1 is reduced due to, for example, re-sharpening, the protruding amount L of the blade-shaped object 1 is maintained at the predetermined length in accordance with the reduction.

This configuration always maintains the protruding amount L optimally. It is therefore possible to bore a hole by a predetermined depth and to suppress occurrence of a situation in which the blade-shaped object 1 damages the wire 56 or the like located below the face to be processed (i.e., located in the traveling direction of the blade-shaped object 1).

In collecting the swarf 42 discharged in processing the workpiece 50, for example, boring a hole in the workpiece 50 with the blade-shaped object 1, even when the front portion 20 is clogged with the swarf 42, the clogging is easily settled by disassembling and cleaning the contact portion 22 of the front portion 20.

This embodiment thus provides a swarf collecting tool that collects swarf discharged in processing a workpiece, for example, in boring a hole in a workpiece with a blade-shaped object such as a drill or an auger, is disassemblable with ease when the swarf collecting tool is clogged with the swarf, and has a blade-shaped object protruding amount adjusting function of suppressing movement of the blade-shaped object through the workpiece by a predetermined depth or more.

The present invention is not limited to the foregoing embodiment, and involves various modifications. The foregoing embodiment has been described in detail for facilitating understanding of the present invention, and is not necessarily limited to that having all the configurations described above.

### Reference Signs List

- 1: blade-shaped object
- 5: drive
- 6: grasp portion (grip portion)
- 7: holding portion
- 10: swarf collecting tool
- 20: front portion
- 22: contact portion
- 22b: male screw portion
- 24: cylindrical portion
- 24a: swarf guide portion
- 24b: screw portion
- 24c: groove portion
- 24d: swarf discharge portion
- 26: length adjusting portion
- 28: receiving portion
- 28b: small cylindrical portion
- 28t: projection portion
- 28g: large cylindrical portion
- 30: rear portion
- 32: blade-shaped object holding portion
- 32a: cylindrical portion
- 32b: male screw portion
- 32d: claw portion
- 34: tightening portion
- 40: swarf collecting portion
- 42: swarf
- 50: workpiece
- 51, 52: face plate
- 53: connecting plate
- 56: wire
- 60: bearing
- x: axial direction
- y: widthwise direction
- z: heightwise direction
- L: protruding amount
- M: adjustment amount
- R: rotating portion

## Claims

1. A swarf collecting tool to be mounted to a drive for driving a blade-shaped object in processing a workpiece,
the swarf collecting tool comprising:
a first base portion configured to hold the blade-shaped object inserted therethrough and to rotate together with the blade-shaped object;
a second base portion through which the blade-shaped object is inserted,
the second base portion including
a swarf discharge portion configured to discharge swarf produced in processing the workpiece with the blade-shaped object, and
a protruding amount adjusting mechanism configured to adjust a protruding amount of the blade-shaped object; and
a bearing with which the second base portion and the first base portion are coupled in a relatively rotatable manner.

2. The swarf collecting tool according to claim 1, wherein
the first base portion includes:
a blade-shaped object holding portion including a claw portion holding the blade-shaped object; and
a tightening portion pressing the claw portion from a radially outer side of the claw portion to hold the blade-shaped object.

3. The swarf collecting tool according to claim 1, wherein
the protruding amount adjusting mechanism includes:
a cylindrical portion through which the blade-shaped object is inserted;
a receiving portion telescopically combined with the cylindrical portion; and
a length adjusting portion screwed on the cylindrical portion such that a position thereof is adjustable, and brought into contact with the receiving portion to adjust a minimum length of a combination of the cylindrical portion and the receiving portion in an axial direction of the blade-shaped object.

4. The swarf collecting tool according to claim 3, wherein
the cylindrical portion has a pair of groove portions each having a crank shape and extending in an axial direction of the cylindrical portion,
the receiving portion has a pair of projection portions protruding in a radial direction,
the cylindrical portion and the receiving portion are combined to be relatively displaceable in the axial direction of the blade-shaped object such that the projection portions are guided by the groove portions, and
the projection portions are brought into contact with the length adjusting portion to adjust the minimum length.

5. The swarf collecting tool according to claim 4, wherein
the cylindrical portion includes a contact portion to be brought into contact with the workpiece, and
the contact portion is relatively displaced toward the receiving portion while being in contact with the workpiece as the blade-shaped object moves through the workpiece during the processing, and is locked when the projection portions come into contact with the length adjusting portion.

6. The swarf collecting tool according to claim 5, wherein
the contact portion is detachable from the cylindrical portion, and
the swarf discharge portion discharges the swarf through a space between the blade-shaped object and an opening in the contact portion through which the blade-shaped object is inserted.
